Europäisches Patentamt

European Patent Office

Office européen des brevets

(11) Numéro de publication: **0 274 348 B1**

# (12) FASCICULE DE BREVET EUROPEEN

(45) Date de publication de fascicule du brevet:
**19.06.91**

(51) Int. Cl.⁵: **A23P 1/16, A23L 1/305**

(21) Numéro de dépôt: **87810701.0**

(22) Date de dépôt: **27.11.87**

(54) **Procédé pour la préparation d'un produit diététique en mousse légère et de propriétés organoleptiques améliorées.**

(30) Priorité: **05.12.86 CH 4862/86**

(43) Date de publication de la demande:
**13.07.88 Bulletin 88/28**

(45) Mention de la délivrance du brevet:
**19.06.91 Bulletin 91/25**

(84) Etats contractants désignés:
**BE DE ES FR GB IT NL**

(56) Documents cités:
**EP-A- 0 037 300**
**FR-A- 2 118 757**
**FR-A- 2 302 046**
**FR-A- 2 360 264**
**FR-A- 2 541 870**

(73) Titulaire: **N.V. Nutricia**
**Stationsstraat 186**
**NL-2712 HM Zoetermeer(NL)**

(72) Inventeur: **Giddey, Claude**
**59, route de Chêne**
**CH-1208 Genève(CH)**
Inventeur: **Dove, Georges**
**Quai du Cheval Blanc 1**
**CH-1227 Carouge / GE(CH)**

(74) Mandataire: **Dousse, Blasco et al**
**7, route de Drize**
**CH-1227 Carouge/Genève(CH)**

## Description

La présente invention a pour objet un procédé de préparation d'un produit diététique en mousse, c'est à dire un produit diététique allégé par la dispersion, dans sa masse, de microbulles d'air ou de gaz inerte et dont la consistance rappelle un peu celle des yaourts ou des desserts "mousse" bien connus. L'invention concerne également le produit mousseux résultant de la mise en oeuvre de ce procédé.

On sait qu'il existe dans le commerce des produits diététiques riches en protéines, matières grasses, hydrates de carbone, sels minéraux et vitamines, ces produits pouvant être consommés comme reconstituants et/ou aliments complémentaires pour malades. De tels produits se présentent souvent sous forme de liquides épais aromatisés de façon variée, contenant généralement des protéines lactées ou végétales, des hydrates de carbone et des matières grasses (émulsifiées), des sels minéraux variés, y compris des oligoéléments et un coktail de vitamines dont la composition varie considérablement suivant l'origine de tels produits et les buts diététiques auxquels ils sont destinés. Or, de tels produits diététiques consommés sous forme de boissons sont souvent lassants au point de vue organoleptiques de par leur consistance liquide. Il était donc désirable de les présenter sous une autre forme alimentaire et notamment de les convertir en un aliment diététique allégé, de consistance lisse et appétisssante.

L'état de la technique cité est constitué par les documents suivants :

(1) Le document FR-A-2.302.046 (CENTRALE LAITIERE DE HAUTE NORMANDIE) décrit la préparation d'un aliment lacté dans laquelle on sépare les constituants carbohydratés du lait écrémé, les fractions protéiniques résiduelles constituant l'aliment désiré (page 2, premier paragraphe). On peut ajouter des produits organoleptiques à cet aliment, notamment du sucre, du chocolat, etc. (voir page 3, lignes 25-30). On peut aussi y ajouter des agents moussants et présenter le produit sous une forme aérée, c'est-à-dire de mousse (page 4, ligne 2 et lignes 32-33).

(2) Le document FR-A-2.541.870 (CENTRALE LAITIERE DE HAUTE NORMANDIE) décrit la fabrication d'un aliment dans laquelle intervient l'addition d'une mousse de sucre (page 3, dernier paragraphe). L'aliment contient des protéines du lait (page 4, premier paragraphe) et des lipides (page 4, deuxième paragraphe), des glucides et des substances organoleptiques (page 5). La mousse est réalisée à partir de gélatine, l'albumine ne convenant pas (pages 7 et 8).

(3) Le document FR-A-2.118.757 (LENDERINK) concerne la fabrication d'aliments sous forme de mousse par battage de mélanges contenant des sucres, de la gélatine, des glycérides, des protéines et des protéines végétales partiellement hydrolysées. Ces aliments se conservent au froid pendant une courte période.

(4) Le document EP-A-37.300 (RHONE POULENC) décrit des aliments pour desserts sous forme de mousses ainsi que leur préparation. Les compositions moussantes décrites ne comprennent pas de matières grasses ni d'émulsifiants; elles contiennent des protéines lactées, des polysaccharides obtenues par fermentation et, éventuellement, d'autres polysaccharides tels que amidons, gommes guar, alginates, carrageenates, agar, etc., ainsi que des adjuvants colorants et aromatisants.

(5) Le document FR-A-2.360.264 (GRACE) décrit un procédé pour la préparation de mousses de fruits ou de légumes. Suivant ce procédé, on incorpore de l'albumine battue en mousse à des purées de fruits ou de légumes cuits; puis on chauffe pour coaguler l'albumine. Une telle mousse peut contenir, de plus (page 4, paragraphe 3), des sucres, des édulcorants, des amidons, des polysaccharides gélifiants, des matières grasses et des arômes.

On est parvenu aux objectifs susmentionnés en appliquant le procédé résumé la revendication 1. L'incorporation de l'amidon et du ou des polysaccharides réticulés ou non se fait, de préférence, sous vigoureuse agitation et à une température de 60 à 90°C. L'incorporation des polysaccharides sucrants, par exemple le sucre, le fructose, la maltodextrine, etc., ainsi que celle des matières grasses qu'on émulsifie dans le présent produit peut se faire avant ou après l'incorporation de l'épaississant (a). Ainsi, par exemple, si on désire convertir le produit diététique en mousse, on utilise une solution (ou dispersion) de celui-ci contenant les divers ingrédients nécessaires et on procède successivement aux étapes I, II et III indiqués à la revendication.

Alternativement, on peut ajouter les ingrédients sus-mentionnés, en tout ou partie, par exemple entre les étapes I et II. Ainsi, dans une forme d'exécution du présent procédé, on ajoute l'agent épaississant (a) à la solution de protéines, de sels minéraux, d'oligoéléments et de vitamine, puis, après mélange, on procède à son émulsification en présence des matières grasses qu'on ajoute simultanément avec les polysaccharides sucrants. Comme matières grasses, on peut utiliser des huiles comestibles diététiques riches en acide gras insaturés telles que les huiles de soja, tournesol, maïs, pépins de raisin.

Les quantités de matières protéiques, par exemple des protéines lactées (caseinates) ou végétales (soja) sont de l'ordre de 10-20 % en poids. Comme protéine lactée, on utilise avantageusement des solides de lait écrémé, dialysé ou ultrafiltrés, ces solides pouvant être constitué de protéines (60-80%) et d'un reliquat de lactose.

L'opération II, c'est à dire l'incorporation de l'albumine battue en neige au reste de la composition se fait de préférence entre 20 et 40° C. Pour parvenir aux meilleurs résultats, c'est à dire à une homogénéisation rapide et efficace de la mousse d'albumine dans le reste de la composition, sans risquer de rompre la mousse, la viscosité de la solution ou dispersion est de préférence comprise entre 150 mPa.s (cP) et 2000 mPa.s (cP) à 25-30° C. On parvient à une telle viscosité par addition d'environ 0,5 à 2 % d'agent épaississant. Cette quantité peut varier en fonction des quantités relatives d'amidon et de polysaccharide. De préférence le rapport pondéral entre ces deux composants est de 1:1 à 2:1. Pour effectuer l'incorporation de l'albumine en neige au reste de la composition, on procède par battage ou agitation vigoureuse dans un mélangeur traditionnel utilisé dans l'industrie alimentaire, par exemple un mélangeur de HOBART. Il est utile de noter ici l'importance que revêt la valeur de la viscosité présentée par la solution contenant l'épaississant au moment de l'incorporation de la mousse d'albumine. En effet, si cette solution est trop fluide, l'homogénéisation se fait difficilement, le produit reste trop liquide et la consistance désirée n'est pas atteinte (celle d'une mousse ferme, légère, légèrement coulante comme une crème très épaisse). Si la viscosité de la solution est trop élevée, l'effort de battage est trop grand, la mousse se rompt et la densité désirée n'est pas atteinte (densités de l'ordre de 0,5 à 0,7).

La stérilisation de la présente mousse (opération III) se fait de préférence par circulation de celle-ci (pompage) dans une tubulure chauffée, à un débit tel que la température de la mousse soit de l'ordre de 130 à 150° pendant 5 à 15 secondes. Des températures plus élevées ou des temps de chauffe plus longs risqueraient de détériorer certains des ingrédients les plus délicats, par exemple les vitamines. Des températures plus basses ou des temps de stérilisation trop courts risqueraient de ne pas amener l'effet attendu, c'est à dire une stérilisation effective. La stabilité de la mousse suivant l'invention est remarquable; elle peut en effet être mise en circulation par des pompes et soumises aux conditions sévères de la stérilisation sans s'altérer et sans séparation de phases.

Les exemples qui suivent illustrent l'invention de manière détaillée.

Exemple 1

Dans 74,14 ml d'eau contenant dissous les minéraux et vitamines ci-dessous, on a dispersé à température ambiante 13,86 g d'un extrait par ultrafiltration de protéines de lait écrémé contenant, en poids 70 % de protéines et 30 % de lactose résiduel.

Minéraux et vitamines

Na 50mg; K 200mg; Ca 270 mg; P 202mg; Mg 40 mg; Cl 82 mg; Fe 2,2 mg;
Zn 1,7 mg; I 13,5 µg (total des minéraux 1,3 g)

Vit.A 0,19 mg; Vit.D3 0,63 µg; Vit.E 1,5 mg; Vit.C 17 mg; Vit.B1 0,17 mg; Vit.B2 0,27 mg; Vit.B6 0,27 mg. acide folique 52 µg; Vit.B12 0,33 µg; acide pantothénique 1,8 mg; biotine 25 µg.

A cette solution, on a ajouté 0,7 g d'amidon (PURFLO), 0,2 g de carrageenate (FLANOGEN) et 0,2 g de gomme xanthane et 0,5 g d'arôme chocolat qu'on a dissous par agitation à 80-90° C.

On a ensuite ajouté 1,8 g de maltodextrine, 4,2 g de saccharose et on a émulsifié le tout en présence de 2,1 g d'huile de maïs contenant 5 % de lécithine. On a procédé à 80° par agitation vigoureuse jusqu'à consistance de crème épaisse ou de mayonnaise fluide.

Par ailleurs on a battu en neige à 30° C une solution de 0,56 g d'albumine en poudre dans 2,24 g d'eau, on a ajouté cette mousse (densité 0,05) à la crème ci-dessus et on a mélangé le tout au mélangeur HOBART à 30° C jusqu'à obtention d'une mousse de densité 0,7.

On a alors pompé cette mousse (pompe MONO) et on l'a fait circuler dans une tuyauterie chauffée à 140° C de manière qu'elle soit portée 6,3 sec. à cette température.

On a prélevé la mousse stérilisée à la sortie de la tuyauterie de stérilisation et on l'a conditionnée aseptiquement dans des pots stériles. Cette mousse, de pH 6,6, présentait un goût et une consistance agréables et appétissants. Elle s'est révélée parfaitement stable au stockage. A la place de l'arôme chocolat, on a également utilisé les arômes vanille, café, fraise et melon.

Exemple 2

On a procédé comme à l'exemple précédent en partant de 96,5 g d'une émulsion aqueuse contenant les mêmes sels minéraux et vitamines que dans l'exemple 1 ainsi que 9,7 g de protéines végétales, 2,1 g d'huile de soja avec 10 % de lécithine, 4,4 g de lactose, 4,7 g de saccharose et 1,3 g de maltodextrine et 0,1 g d'arôme fraise.

A cette émulsion on a mélangé à 70° C, 0,7 g d'amidon, 0,2 g de gomme xanthanne et 0,2 g de gélatine. Puis, à 40° C on a mélangé une mousse d'albumine en neige réalisée à partir de 2,4 g d'une solution aqueuse à 16,7 % de blancs d'oeufs en poudre.

Après avoir mélangé fortement pendant 6 min., on a procédé à la stérilisation comme dans l'exemple précédent ainsi qu'au conditionnement en pots stérilisés. Densité 0,65 ; goût et consistance excellents.

## Revendications

1. Procédé pour la préparation d'un produit diététique en mousse constitué par une dispersion stable de microbulles d'air ou de gaz dans une solution aqueuse contenant, émulsifiée, une matière grasse et contenant des protéines, de faibles quantités de polysaccharides sucrants, des sels minéraux et oligoéléments et des vitamines, caractérisé par le fait que (I) on incorpore et mélange à cette solution aqueuse un agent épaississant (a) constitué par au moins un amidon et au moins un additif de structure constitué par un polysaccharide choisi parmi les gommes xanthane ,carrageenate, alginate, guar, arabique et la pectine, (II) on incorpore de façon homogène de 0,2 à 1,2 % en poids d'une mousse de solution aqueuse d'albumine (b) battue en neige, la quantité d'agent (a) étant telle que le produit ainsi épaissi présente une viscosité suffisante pour qu'on puisse homogénéiser le tout par battage à une température de 30 à 50°C sans détériorer la mousse d'albumine (b), et (III) on chauffe le produit en mousse ainsi obtenu pendant quelques secondes à une température de 80 à 150°C de manière à le pasteuriser ou à la stériliser.

2. Procédé suivant la revendication 1, caractérisé par le fait que la viscosité du produit avant incorporation de l'albumine battue à l'étape II est de 150 à 2000 mPa.s (cP) à 25°C.

3. Procédé suivant la revendication 1, caractérisé par le fait que la quantité d'agent épaississant est de 0,5 à 2 % en poids.

4. Procédé suivant la revendication 1, caractérisé par le fait que la proportion entre l'amidon et le polysaccharide réticulé est de 1:1 à 2:1 en poids.

5. Procédé suivant la revendication 1, caractérisé par le fait que la densité du produit diététique en mousse est inférieure à 0,7.

6. Procédé suivant la revendication 1, caractérisé par le fait qu'on ajoute également au produit diététique un arôme choisi parmi le chocolat, le café, la vanille et les arômes de fruits et autres arômes usuels.

## Claims

1. A method for the preparation of a dietary foam product which consists of a stable dispersion of air or gas microbubbles in an aqueous solution that contains an emulsified fat, proteins, small quantities of sweetening polysaccharide, mineral oligoelements and salts and vitamines, characterized in (I) there is incorporated to this aqueous solution and admixed therewith a thickening agent (a) consisting of at least a starch and at least a structural additive comprising a polysaccharide selected from gum xanthan, carrageenate, alginate, guar, arabic and pectin, (II) there is homongeneously incorporated therein from 0,2 to 1,2% by weight of (b) a foam of whipped albumin aqueous solution, the quantity of agent (a) being such that the product being thickened has sufficient viscosity to be homogeneized under beating at a temperature of 30 to 50°C without damaging the albumin foam (b), and (III) the foam product thus obtained is heated for a few seconds at a temperature of 80 to 150°C to effect pasteurization or sterilization.

2. The method according to claim 1, characterized in that the viscosity of the product before incorporation of the whipped albumin in step (II) was 150 to 2000 mPa.s (cP) at 25°C.

3. The method according to claim 1, characterized in that the amount by weight of the thickening agent is 0,5 to 2%.

4. The method according to claim 1, characterized in that the weight ratio between the starch and the cross-linked polysaccharide is 1:1 to 2:1.

5. The method according to claim 1, characterized in that the density of the dietary product foam is below 0,7.

6. The method according to claim 1, characterized in that there is added to the dietary product also a flavor selected from chocolate, coffee, vanilla, fruit flavours and other commonly used flavors.

## Ansprüche

1. Verfahren zur Herstellung eines diätetischen Schaumprodukts gebildet aus einer stabilen Dispersion von Mikrobläschen von Luft oder Gas in einer wässrigen Lösung, die eine emulgierte Fettmasse und Proteine, geringe Mengen süßender Polysaccharide, Mineralsalze und Oligoelemente und Vitamine enthält, dadurch gekennzeichnet, (I) daß man in diese wässrige Lösung ein Eindickungsmittel (a) inkorporiert und vermischt, das mindestens aus einer Stärke und mindestens einem Strukturadditiv besteht, das aus den Gommearten Xanthan, Carrageenat, Alginat, Guar, Gummiarabicum und Pektin ausgewählt ist, (II) daß man in homogener Weise 0,2 bis 1,2 Gew. % eines Schaums der wässrigen Lösung von Albumin (b) zu Schnee geschlagen beigibt, wobei die Menge des Mittels (a) eine solche ist, daß man das so eingedickte Produkt eine ausreichende Viskosität besitzt, um das Ganze durch Schlagen bei einer Temperatur von 30 bis 50° C ohne Zerstörung des Albuminschaums (b) homogenisieren kann, und (III) daß man das so erreichte Schaumprodukt während einiger Sekunden auf eine Temperatur von 80 bis 150° C erwärmt, um es zu pasteurisieren oder zu sterilisieren.

2. Verfahren nach Anspruch 1, dadurch gekennzeichnet, daß die Viskosität des Produktes vor der Inkorporierung des im Schritt II geschlagenen Albumins zwischen 150 und 2000 mPa. s- (cP) bei 25° C liegt.

3. Verfahren nach Anspruch 1, dadurch gekennzeichnet, daß die Menge des Eindickungsmittels zwischen 0,5 und 2 Gew. % liegt.

4. Verfahren nach Anspruch 1, dadurch gekennzeichnet, daß das Gewichtsverhältnis zwischen Stärke und vernetztem Polysaccharid zwischen 1:1 und 2:1 liegt.

5. Verfahren nach Anspruch 1, dadurch gekennzeichnet, daß die Dichte des diätetischen Schaumprodukts kleiner als 0,7 ist.

6. Verfahren nach Anspruch 1, dadurch gekennzeichnet, daß man dem diätetischen Produkt des weiteren ein Aroma zugibt, ausgewählt aus Schokolade, Kaffee, Vanille und Fruchtaromen und anderen üblichen Aromen.